# FASCICULE DE BREVET EUROPEEN

(11) **EP 2 520 494 B1**
(45) Date de publication et mention de la délivrance du brevet: **01.01.2014**
(21) Numéro de dépôt: 12166885.9
(22) Date de dépôt: 04.05.2012
(51) Int. Cl.: B64G 1/22, B64G 1/54, B64G 1/66, B64G 1/44, B64G 1/50

(54) **Dispositif de protection d'un instrument optique multifaisceaux**
Vorrichtung zum Schutz eines optischen Vielfachspiegelinstruments
Device for protecting a multiple mirror optical instrument

(30) Priorité: 05.05.2011 FR 1101385
(43) Date de publication de la demande: 07.11.2012
(73) Titulaire: Thales, 92200 Neuilly Sur Seine (FR)
(72) Inventeur: Baudasse, Yannick, 06130 Grasse (FR); Vezain, Stéphane, 06210 Mandelieu (FR)
(74) Mandataire: Collet, Alain

(56) Documents cités:
- EP-A1- 1 873 061
- EP-A1- 2 151 704
- US-A1- 2004 051 878
- US-B1- 7 557 995
- US-B1- 7 631 839

## Description

L'invention concerne le domaine des dispositifs de protection des instruments optiques des satellites et, en particulier, des instruments optiques multi-faisceaux.

Les instruments optiques multifaisceaux comportent généralement un miroir primaire situé dans l'instrument optique, un miroir secondaire central positionné en vis à vis du miroir primaire et plusieurs miroirs périphériques réfléchissant la lumière vers le miroir secondaire central. Chacun de ces miroirs périphériques nécessite d'être protégé contre les entrées solaires directes. Les protections évitent les perturbations optiques et permettent de réguler la température à proximité des plans focaux. Cette protection assure les performances optiques des instruments.

Ces instruments montés sur des satellites sont mis en orbite par des lanceurs. Le faible volume alloué sous la coiffe du lanceur rend impossible d'avoir un dispositif de protection fixe disposé en avant de l'instrument optique. Il est donc nécessaire de déployer cette protection en vol, avant la phase opérationnelle.

Les problèmes techniques rencontrés dans le cas de déploiement de grandes structures sont principalement :
En configuration stockée : volume restreint pour le stockage de la structure, maintien de l'intégrité de cette structure en configuration repliée, face aux agressions mécaniques et thermiques dues aux lancement de l'engin spatial, (notamment la non dégradation des éléments de protection thermique très fragile),

Pendant le déploiement : la maîtrise du déploiement en terme de cinématique, la régulation de la vitesse afin d'éviter les chocs en fin de déploiement.

En configuration déployée : assurer la stabilité et la rigidité en vol afin de garantir la pilotabilité de l'engin, et assurer un bon positionnement de la structure afin d'assurer la limitation des entrées solaires et la non obturation du champ de vue.

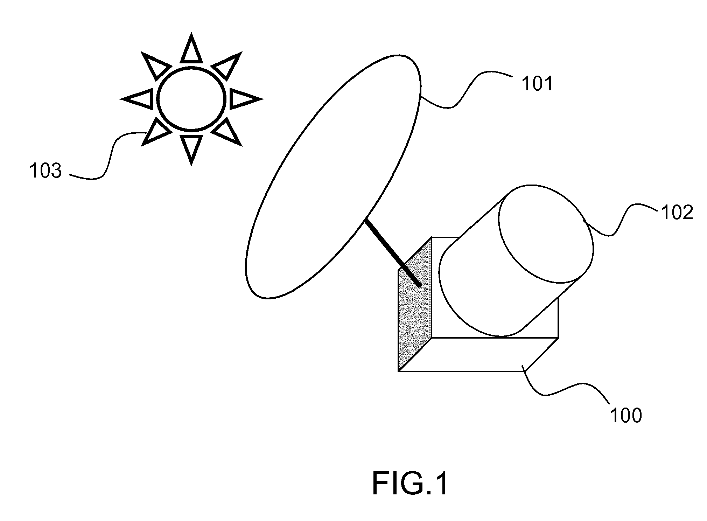

La figure 1 représente un dispositif de protection d'un instrument optique d'un satellite selon l'art connu. Ce dispositif comprend un écran solaire plan 101 positionné à une certaine distance du satellite 100 de façon protégé l'instrument optique contre la lumière parasite provenant du soleil 103. L'utilisation d'un écran plan implique, dans certaines missions, d'avoir un élément tournant (l'écran solaire) de grande dimension. Cette solution pose en outre des problèmes : de fiabilité, de perturbation AOCS (acronyme de l'expression anglo-saxonne Attitude Orbit Control System), de perturbations au niveau des mesures optiques et de durée de vie dues aux éléments mécaniques mis en oeuvre.

De plus, afin d'éviter les entrées solaires durant certaines périodes, des pivotements complémentaires de l'écran solaire sont nécessaires, ce qui complexifie encore ce type de solution.

Ainsi, une protection proche des faisceaux optiques est une solution plus efficace car dénuée de tout mouvement pendant toute la phase opérationnelle.

Pour réaliser ce type de protection enveloppante, il est possible d'utiliser plusieurs technologies basées sur une structure porteuse déployable assurant le maintien et le positionnement d'un substrat souple.

La structure porteuse peut être gonflable et rigidifiable en vol mais la maîtrise du déploiement est complexe car difficilement modélisable par calcul et complexe à tester. De plus, les procédés de rigidification sont irréversibles et ne permettent donc pas de tester au sol un modèle destiné au vol.

On connaît déjà des dispositifs de protections souples basés sur l'utilisation d'un fourreau de forme cylindrique souple, composés de feuilles de protection thermique. Cet élément est plié sur lui même pendant la phase stockée puis déployé et mis en tension. Cette solution présente plusieurs inconvénients. Tout d'abord lors du stockage, il est difficile d'éviter la dégradation des membranes constituant le matelas de protection thermique. Celles-ci sont très fragiles et sont sensibles aux agressions mécaniques. La membrane dégradée produit des poussières qui, lors du déploiement, sont dispersées sur l'instrument et dégradent ces performances optiques. De plus, pour obtenir un stockage compact, il est nécessaire de plier les éléments flexibles, ce pliage est généralement irréversible et fragilise la membrane. Enfin, l'énergie nécessaire à la mise en tension de l'élément flexible, afin de lui assurer un bon positionnement final, est difficilement calculable car le déploiement est alors peu reproductible. Il en résulte une sur-estimation de l'énergie nécessaire à la mise en tension de l'élément flexible, afin de lui assurer un bon positionnement final, ce qui peut engendrer des dégradations sur certains composants et sur la membrane. A titre d'exemple, on pourra également consulter les brevets et demandes de brevets référencés US 7557995, EP2151704, EP1873061, US 7631839 et US2004/051878.

L'invention vise à pallier les problèmes cités précédemment en proposant un dispositif de protection d'un instrument optique d'un satellite suffisamment compact en positon stockée, pour permettre l'aménagement du satellite sous la coiffe d'un lanceur, permettant un déploiement maîtrisé et régulé, qui, une fois déployé offre une protection efficace contre des entrées solaires parasites et disposant d'une rigidité suffisante pour permettre le contrôle du satellite.

A cet effet, l'invention a pour objet un dispositif de protection d'un instrument optique d'un satellite comprenant un corps sur lequel est monté l'instrument optique, l'instrument optique comportant un miroir primaire situé dans l'instrument optique, un miroir secondaire central positionné en vis à vis du miroir primaire et plusieurs miroirs périphériques réfléchissant la lumière vers le miroir secondaire central , ledit dispositif de protection comportant une position repliée et une position déployée, **caractérisé en ce qu'**il comprend une pluralité de panneaux rigides, en position déployée, le dispositif formant une structure en alvéole comportant un tube pour chaque miroir périphérique, la section des tubes étant un polygone, les tubes étant disposés de façon à protéger les miroirs périphériques contre un éclairage parasite, en position repliée, lesdits panneaux étant maintenus contre le corps du satellite.

Avantageusement, le dispositif de protection comprend en outre des moyens de maintien des panneaux en positon repliée.

Avantageusement, les moyens de maintien comprennent des tirants traversant disposés pour chacune des alvéoles sur un des panneaux de l'alvéole, et des pieds de gerbages disposés sur le corps de satellite de façon à retenir les tirants en position repliée.

Avantageusement, le dispositif de protection comprend en outre des panneaux solaires fixés aux panneaux par le biais d'articulations, de façon à être maintenue contre les panneaux en position repliée et à être perpendiculaire à l'axe longitudinal du tube en position déployée.

Selon un mode de réalisation, les panneaux sont pleins.

Selon un autre mode de réalisation, les panneaux comportent un cadre rigide sur lequel est fixée une membrane tendue.

Avantageusement, les panneaux de protection comprennent des éléments de contrôle actif et passif positionnés directement sur leur surface, le dispositif assurant une fonction de régulateur thermique.

La solution de l'invention utilise des éléments rigides dont les caractéristiques techniques sont parfaitement connues, maîtrisées et reproductibles. Cette solution permet de stocker d'une manière compacte et rigide un dispositif de forme polygonale, déployable, pouvant atteindre plusieurs dizaines de mètres de longueur.

L'invention sera mieux comprise et d'autres avantages apparaîtront à la lecture de la description détaillée faite à titre d'exemple non limitatif et à l'aide des figures parmi lesquelles :
La figure 1, déjà présentée, représente un dispositif de protection selon l'art connu.
Les figures 2a à 2e représentent les étapes de déploiement d'un exemple de réalisation d'un dispositif selon l'invention.
La figure 3 représente l'emplacement de moyens de maintien des panneaux dans l'exemple réalisation de l'invention.
La figure 4 représente une variante de réalisation du dispositif de protection selon l'invention comportant des générateurs solaires.

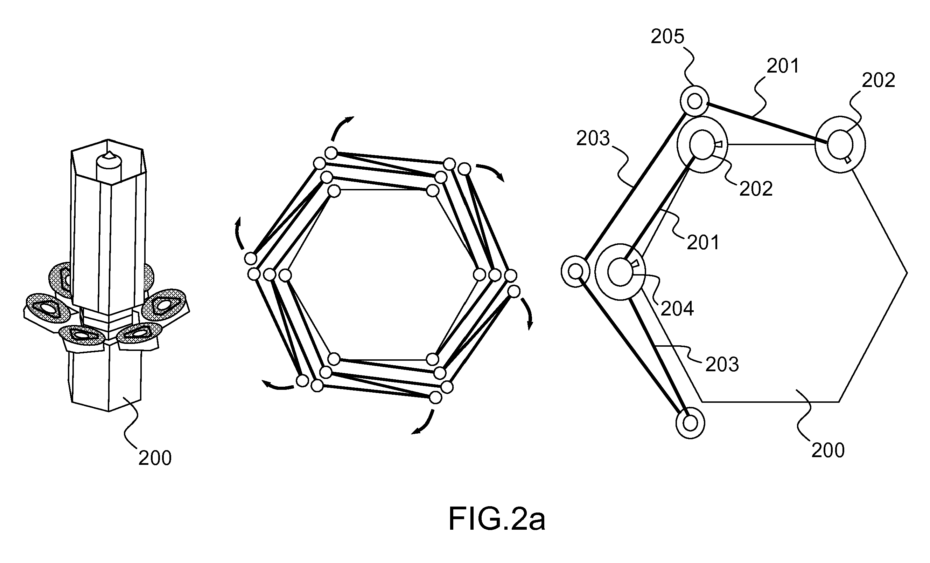

Les figures 2a à 2e représentent les étapes de déploiement d'un exemple de réalisation d'un dispositif selon l'invention. L'exemple de réalisation du dispositif de protection selon l'invention utilise des panneaux articulés formant, en position déployée, un réseau de six tubes hexagonaux. Chaque hexagone est composé de six panneaux dont un en commun à la caisse du satellite et cinq autres liées entres eux par des articulations simples ou auto-motorisées.

Les panneaux communs à la caisse de chaque alvéole comportent des interstices permettant de laisser passer la lumière depuis les miroirs périphériques vers le miroir secondaire central.

Les liaisons inter-panneaux permettent d'obtenir une structure fermée et donc assurent une rigidité globale de l'ensemble, ainsi qu'une étanchéité parfaite aux entrées solaires.

Chaque alvéole comporte un panneau commun avec chacune des alvéoles voisines.

Les figures 2a à 2e représentent les étapes de déploiement d'un exemple de réalisation d'un dispositif selon l'invention. Dans la suite de la description, on appelle premiers panneaux 201, les panneaux directement reliés au corps 200 du satellite. On peut remarquer que l'on compte autant de premiers panneaux que de faces sur le corps du satellite (et donc de miroirs périphériques) soit six dans l'exemple.

Les premiers panneaux 201 sont reliés au corps 200 des satellites par des articulations automotrices dites premières articulations 202.

On appelle deuxièmes panneaux 203, les panneaux reliés aux premiers panneaux. Chaque premier panneau 201 est relié à deux deuxièmes panneaux 203 par deux articulations différentes. Une 204 de ces articulations est automotrice l'autre 205 est en rotation libre pendant tout le déploiement.

Les articulations automotrices reliant les premiers panneaux 201 aux deuxièmes panneaux 203 sont appelées deuxièmes articulations 204.

La figure 2a représente le dispositif de protection selon l'invention en position stockée selon une vue en perspective, une première vue de dessus et une seconde vue de dessus, simplifiée, montrant une seule alvéole.

Au début du déploiement, les premières 202 articulations sont inertes. Les deuxièmes articulations 204 sont motrices. L'action de chacune des deuxièmes articulations 204 a pour effet de provoquer la rotation de chacun des deuxièmes panneaux 203 par rapport aux premiers panneaux 201 et autour de chacune de ces deuxièmes articulations 204.

Les autres articulations sont en rotations libres. Ces articulations restent en rotation libres pendant tout le déploiement.

Les rotations s'effectuent autour d'axes parallèles aux axes longitudinaux des tubes.

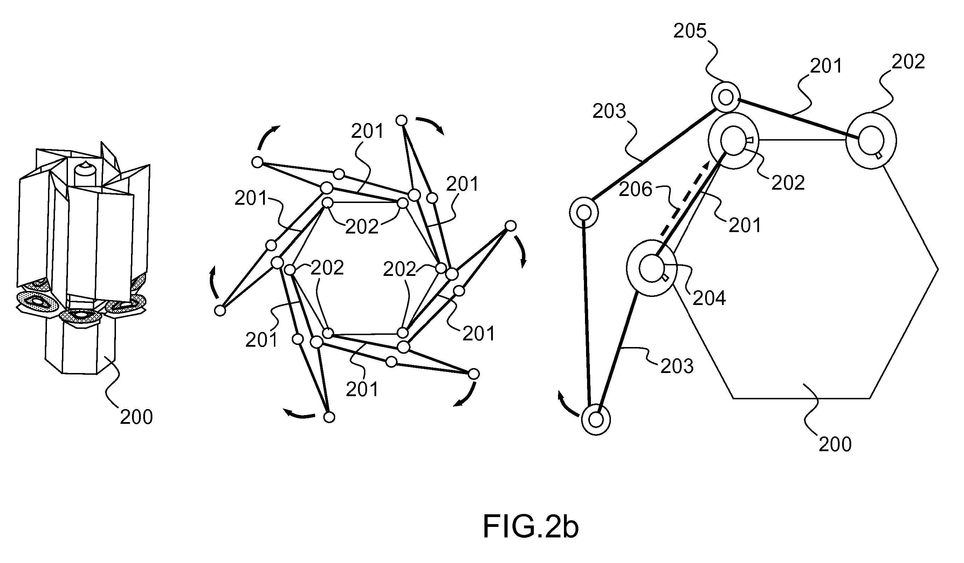

La figure 2b représente le dispositif de protection selon l'invention lors d'une première étape intermédiaire de déploiement selon une vue en perspective, une première vue de dessus et une seconde vue de dessus, simplifiée, montrant une seule alvéole.

Cette figure illustre un mécanisme 206 de séquencement permettant de déclencher la motorisation des premières articulations 202. Le mécanisme de séquencement intervient lorsque la rotation des deuxièmes panneaux 203 est suffisamment avancée et que leur position permet le déploiement des autres panneaux. Dans l'exemple de la figure, le mécanisme 206 de séquencement déclenche la motorisation des premières articulations lorsque les deuxièmes panneaux 203 sont dans le prolongement des premiers panneaux 201 auxquels ils sont reliés. La motorisation des articulations entres elles est réalisable par l'intermédiaire de système câbles/ poulies. Ce système associé à des poulies de formes variable (cames), ou de butées escamotables, permet également une synchronisation (avance/ retard) ou un séquencement de l'ouverture des différents panneaux entres eux.

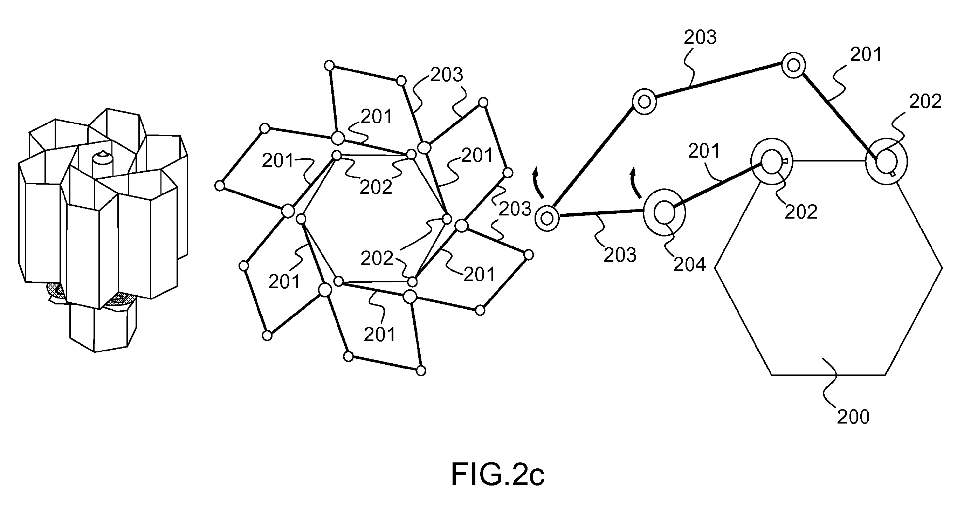

La figure 2c représente le dispositif de protection selon l'invention lors d'une deuxième étape intermédiaire de déploiement selon une vue en perspective, une première vue de dessus et une seconde vue de dessus, simplifiée, montrant une seule alvéole.

Cette figure illustre le dispositif après l'activation du mécanisme de séquencement. Les premières 202 et deuxièmes 204 articulations sont toujours motrices.

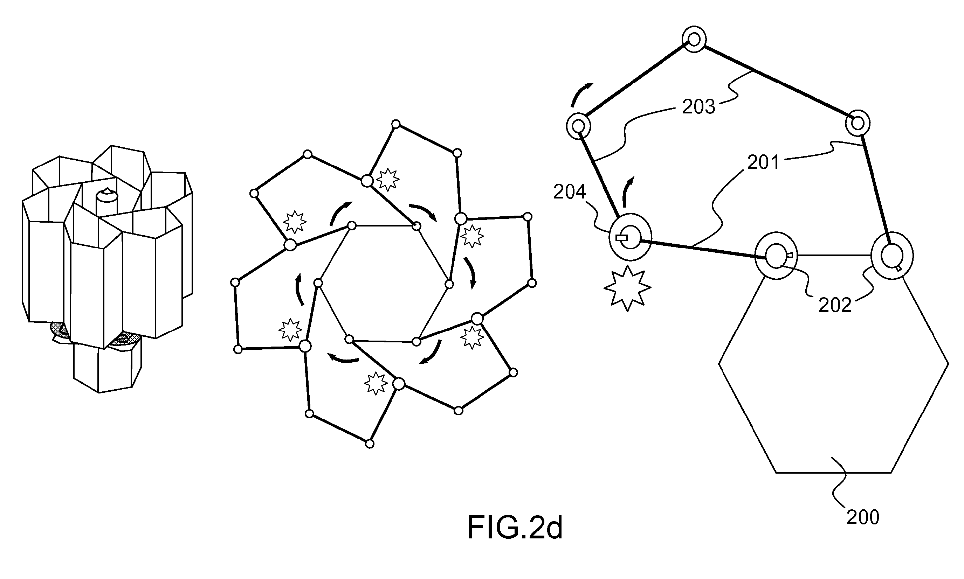

La figure 2d représente le dispositif de protection selon l'invention lors d'une troisième étape intermédiaire de déploiement selon une vue en perspective, une première vue de dessus et une seconde vue de dessus, simplifiée, montrant une seule alvéole.

Lors de la troisième étape intermédiaire, les deuxièmes articulations 204 sont verrouillées lorsque les premiers panneaux 201 et les deuxièmes panneaux 203 sont dans leur position définitive les uns par rapport aux autres, le verrouillage étant symbolisé par une étoile situé à côté de l'articulation verrouillée. Après leur verrouillage, les deuxièmes articulations 204 deviennent immobiles. Les premiers panneaux 201 et les deuxièmes panneaux 203 sont alors solidaires. Les premières articulations 202 sont toujours motrices.

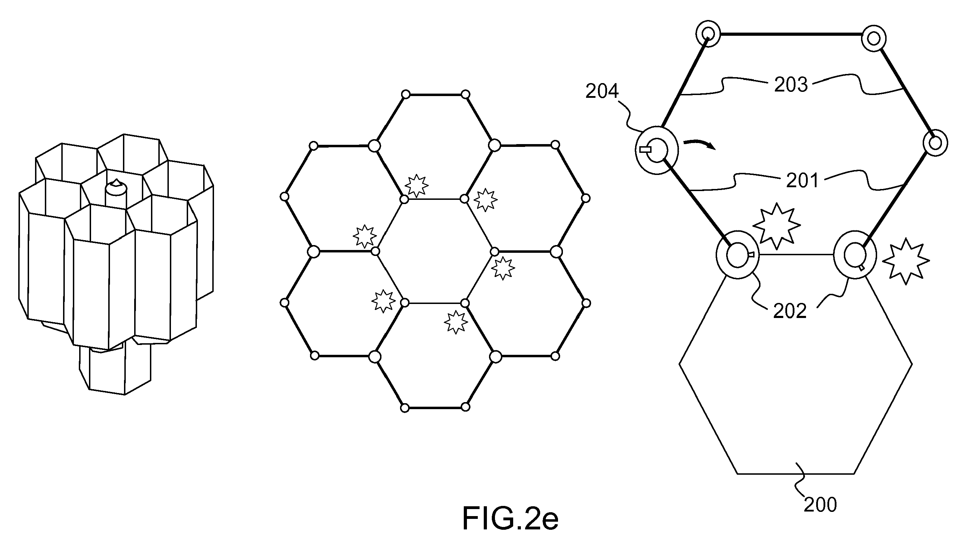

La figure 2e représente le dispositif de protection selon l'invention en position déployée selon une vue en perspective, une première vue de dessus et une seconde vue de dessus, simplifiée, montrant une seule alvéole

Les premières articulations 202 sont alors verrouillées.

Selon une caractéristique de l'invention, le dispositif de protection comprend en outre des moyens de maintien des panneaux en positon repliée.

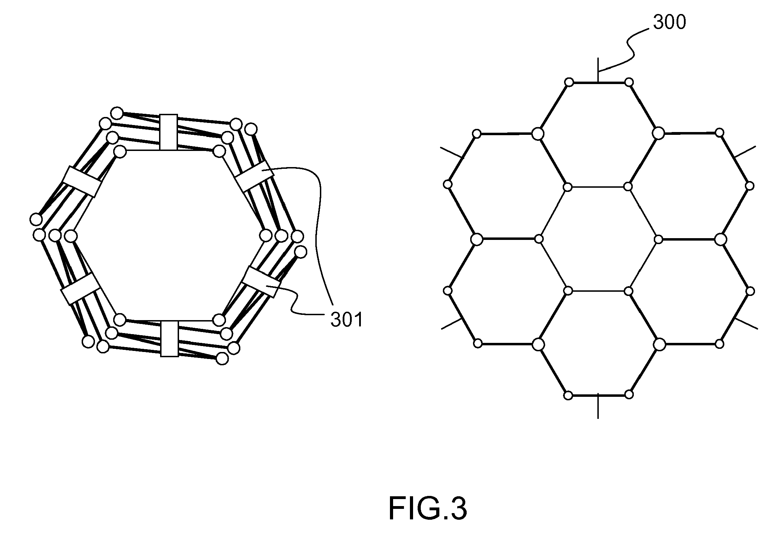

La figure 3 représente l'emplacement de moyens de maintien des panneaux dans le premier mode réalisation de l'invention.

Dans cet exemple de réalisation, les moyens de maintien comprennent des tirants traversant 300 disposés pour chacune des alvéoles sur un des panneaux de l'alvéole, et des pieds de gerbages 301 disposés sur le corps de satellite de façon à retenir les tirants en position repliée.

En positon repliée, les panneaux sont maintenus stockés contre la caisse au moyen des pieds de gerbage 301 à tirants traversant 300 comme ceux utilisés sur les antennes ou les générateurs solaires.

En positon déployée, les tirants 300 sont projetés en face externe des panneaux pour ne pas être dans le champ de vision de l'instrument optique. Les tirants, lors de leur projection en face arrière, obturent les trous de passage dans les panneaux et empêchent ainsi toutes entrées solaires parasites.

Avantageusement le dispositif de protection comporte en outre des panneaux solaires fixés aux panneaux par le biais d'articulations, de façon à être maintenue contre les panneaux en position repliée et à être perpendiculaire à l'axe longitudinal du tube en position déployée.

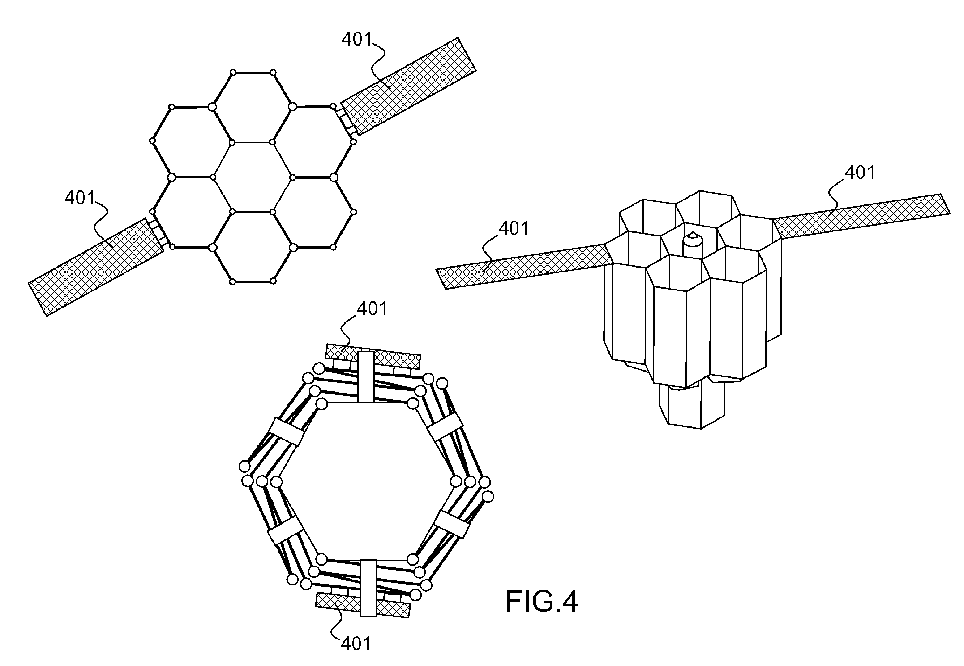

La figure 4 représente une variante de réalisation du dispositif de protection selon l'invention comportant des générateurs solaires. L'exemple montre deux panneaux solaires 401. Les panneaux solaires sont donc également déployables et sont stockés sur les faces externes de certains panneaux.

Les articulations sont situées sur les panneaux 401 à l'extrémité opposée au corps du satellite. Les générateurs solaires peuvent également être positionnés à la base opposée du baffle de télescope ou dans n'importe quelle position si le stockage le permet.

Les articulations permettent de faire pivoter les panneaux solaires 401 autour d'un axe orthogonal à l'axe longitudinal des tubes. En position repliée, l'axe longitudinal les panneaux solaires 401 est parallèle à l'axe longitudinal des tubes. Les système de gerbage utilisés pour les panneaux de baffles déployable peuvent être également ceux utilisés pour le générateur solaire. En position déployée, l'axe longitudinal des panneaux solaires est perpendiculaire à l'axe longitudinal du tube.

Selon une variante de l'invention, les panneaux sont pleins. (Selon une variante de l'invention, les panneaux comportent un cadre rigide sur lequel est fixée une membrane tendue.

Afin de garantir de bonnes performances des instruments, le dispositif de protection peut également assurer la fonction de régulateur thermique, grâce à l'adjonction d'éléments de contrôle actif et passif positionnés directement sur la surface des panneaux.

Les composants permettant le contrôle thermique (actif et passif) sont liés à un substrat rigide et sont donc protégées des agressions mécanique en position repliée et durant le déploiement.

## Revendications

1. Dispositif de protection destiné à protéger un instrument optique d'un satellite comprenant un corps (200) sur lequel est monté l'instrument optique, l'instrument optique comportant un miroir primaire situé dans l'instrument optique, un miroir secondaire central positionné en vis à vis du miroir primaire et plusieurs miroirs périphériques réfléchissant la lumière vers le miroir secondaire central, ledit dispositif de protection comportant une position repliée et une position déployée, le dispositif comprenant une pluralité de panneaux rigides (201, 203), **caractérisé en ce que**, en position déployée, le dispositif forme une structure en alvéole comportant un tube pour chaque miroir périphérique, la section des tubes étant un polygone, les tubes étant disposés de façon à protéger les miroirs périphériques contre un éclairage parasite, en position repliée, lesdits panneaux étant destinés à être maintenus contre le corps (200) du satellite.

2. Dispositif de protection selon la revendication 1, comprenant en outre des moyens de maintien des panneaux en positon repliée.

3. Dispositif de protection selon l'une des revendications précédentes, dans lequel les moyens de maintien comprennent des tirants (300) traversant disposés pour chacune des alvéoles sur un des panneaux de l'alvéole, et des pieds de gerbages destinés à être disposés sur le corps de satellite de façon à retenir les tirants en position repliée.

4. Dispositif de protection selon l'une des revendications précédentes, comportant en outre des panneaux solaires (401) fixés aux panneaux par le biais d'articulations, de façon à être maintenue contre les panneaux en position repliée et à être perpendiculaire à l'axe longitudinal du tube en position déployée.

5. Dispositif de protection selon l'une des revendications précédentes, dans lequel les panneaux sont pleins.

6. Dispositif de protection selon l'une des revendications 1 à 5, dans lequel les panneaux comportent un cadre rigide sur lequel est fixée une membrane tendue.

7. Dispositif de protection selon l'une des revendications précédentes, dans lequel les panneaux de protection comprennent des éléments de contrôle actif et passif positionnés directement sur leur surface, le dispositif assurant une fonction de régulateur thermique.

## Patentansprüche

1. Schutzvorrichtung zum Schützen eines optischen Instruments eines Satelliten mit einem Körper (200), an dem das optische Instrument montiert ist, wobei das optische Instrument Folgendes umfasst: einen primären Spiegel, der sich in dem optischen Instrument befindet, einen zentralen sekundären Spiegel, der sich gegenüber dem ersten Spiegel befindet, und mehrere periphere Spiegel, die das Licht auf den zentralen sekundären Spiegel reflektieren, wobei die Schutzvorrichtung eine zusammengeklappte Position und eine ausgebreitete Position aufweist, wobei die Vorrichtung mehrere starre Platten (201, 203) umfasst, **dadurch gekennzeichnet, dass** die Vorrichtung in der ausgebreiteten Position eine zelluläre Struktur mit einem Rohr für jeden peripheren Spiegel umfasst, wobei der Querschnitt der Rohre ein Polygon ist, wobei die Rohre so angeordnet sind, dass sie die peripheren Spiegel in der zusammengeklappten Position vor parasitärer Beleuchtung schützen, wobei die Platten so ausgelegt sind, dass sie gegen den Körper (200) des Satelliten gehalten werden.

2. Schutzvorrichtung nach Anspruch 1, die darüber hinaus Mittel zum Halten der Platten in der zusammengeklappten Position umfasst.

3. Schutzvorrichtung nach einem der vorherigen Ansprüche, bei der die Haltemittel durchgehende Zuganker (300), die für jede der Zellen auf einer der Platten der Zelle angeordnet sind und Stapelungsfüße umfassen, die dazu bestimmt sind, so am Satellitenkörper angeordnet zu werden, dass sie die Zuganker in der zusammengeklappten Position halten.

4. Schutzvorrichtung nach einem der vorherigen Ansprüche, die darüber hinaus Solarplatten (401) umfasst, die mittels Gelenken so an den Platten befestigt sind, dass sie in der zusammengeklappten Position an den Platten und in der ausgebreiteten Position lotrecht zur Längsachse des Rohrs gehalten werden.

5. Schutzvorrichtung nach einem der vorherigen Ansprüche, wobei die Platten massiv sind.

6. Schutzvorrichtung nach einem der Ansprüche 1 bis 5, bei der die Platten einen starren Rahmen umfassen, an dem eine gespannte Membran befestigt ist.

7. Schutzvorrichtung nach einem der vorherigen Ansprüche, bei der die Schutzplatten aktive und passive Steuerelemente umfassen, die direkt auf ihrer Oberfläche positioniert sind, wobei die Vorrichtung eine Thermoregelfunktion bietet.

## Claims

1. A protection device designed to protect an optical instrument of a satellite comprising a body (200), onto which said optical instrument is mounted, said optical instrument comprising a primary mirror located inside said optical instrument, a central secondary mirror positioned opposite said primary mirror and a plurality of peripheral mirrors reflecting light toward said central secondary mirror, said protection device comprising a folded position and a deployed position, said device comprising a plurality of rigid panels (201, 203), **characterised in that** in the deployed position said device forms a cell structure comprising one tube for each peripheral mirror, with the cross-section of the tubes being a polygon, said tubes being disposed so as to protect said peripheral mirrors against interfering light in the folded position, said panels being designed to be held against said body (200) of said satellite.

2. The protection device according to claim 1, further comprising means for holding said panels in the folded position.

3. The protection device according to any one of the preceding claims, wherein said holding means comprise traversing tie rods (300), which for each of the cells are disposed on one of said panels of the cell, and stacking feet designed to be disposed on said body of said satellite so as to hold said tie rods in the folded position.

4. The protection device according to any one of the preceding claims, further comprising solar panels (401) fixed to said panels by means of hinges so as to be held against said panels in the folded position and to be perpendicular to the longitudinal axis of said tube in the deployed position.

5. The protection device according to any one of the preceding claims, wherein said panels are full.

6. The protection device according to any one of claims 1 to 5, wherein said panels comprise a fixed frame to which a taut membrane is mounted.

7. The protection device according to any one of the preceding claims, wherein said protection panels comprise active and passive control elements positioned directly on their surface, with said device providing a thermal regulator function.
